# EUROPEAN PATENT SPECIFICATION

(11) **EP 2 554 407 B1**
(45) Date of publication and mention of the grant of the patent: **25.02.2015**
(21) Application number: 11762247.2
(22) Date of filing: 29.03.2011
(51) Int. Cl.: B60G 17/015, B60G 7/00, B62D 17/00

(54) **CAMBER ANGLE ADJUSTING DEVICE**
VORRICHTUNG ZUR EINSTELLUNG EINES KRÜMMUNGSWINKELS
DISPOSITIF DE RÉGLAGE D'ANGLE DE CARROSSAGE

(30) Priority: 30.03.2010 JP 2010076704
(43) Date of publication of application: 06.02.2013
(73) Proprietor: Equos Research Co., Ltd., Chiyoda-ku Tokyo 101-0021 (JP)
(72) Inventor: MIZUNO, Akira, Tokyo 101-0021 (JP); HORIGUCHI, Munehisa, Tokyo 101-0021 (JP); OKADA, Masaki, Tokyo 101-0021 (JP); ABE, Minoru, Tokyo 101-0021 (JP); ISOGAI, Kazuo, Tokyo 101-0021 (JP)
(74) Representative: TBK
(86) International application number: PCT/JP2011/001864
(87) International publication number: WO 2011/122000

(56) References cited:
- JP-A- 2009 132 377
- JP-A- 2009 154 548

## Description

### TECHNICAL FIELD

The present invention relates to camber angle adjusting devices capable of changing the camber angle of a vehicle wheel with a simple structure.

### BACKGROUND ART

Conventionally, of camber angle adjusting devices that change the camber angle of a vehicle wheel with respect to a vehicle body, there is a type of camber angle adjusting device that, with a simple structure, reduces load on an actuator and ensures strength (Patent Document 1).

Patent Document 1: Japanese Patent Application Publication No. 2009-132377 (JP 2009-132377 A)

### DISCLOSURE OF THE INVENTION

### [Problems to be Solved by the Invention]

In the invention described in Patent Document 1, however, the actuator is mounted in an unsprung portion. This increases the unsprung weight, and may affect ride quality and dynamics.

The present invention solves the above problems, and it is an object of the present invention to provide a camber angle adjusting device that, with a simple structure, reduces the unsprung weight and improves ride quality and dynamics.

### [Means for Solving the Problems]

Thus, according to the present invention, a camber angle adjusting device that changes a camber angle of a vehicle wheel suspended from a vehicle body via a suspension device is characterized by including: a base member that is supported in an unsprung portion with respect to the suspension device; a drive member that is mounted in the vehicle body in a sprung portion, and generates a driving force; a cable member that transmits the driving force generated by the drive member; a swing lever that is disposed in the unsprung portion, and is coupled to the cable member; a crank member that is disposed in the unsprung portion, and is rotated by rotation of the swing lever; a moving member that is disposed in the unsprung portion, and converts the rotational movement of the crank member to make linear movement; and a pivot member that supports the vehicle wheel, and is supported pivotally about a camber axis with respect to the base member according to the movement of the moving member.

The camber angle adjusting device is characterized by further including a speed increasing portion that increases a speed of the rotation of the swing lever to rotate the crank member.

The camber angle adjusting device is characterized in that the drive member has a motor, a speed reducing portion that reduces a speed of rotation of the motor, and a feed screw that has trapezoidal threads and converts the rotational movement reduced in speed by the speed reducing portion into linear movement.

The camber angle adjusting device is characterized by further including an angle sensor that, in the unsprung portion, detects a position of the crank member.

### [Effects of the Invention]

In the invention according to claim 1, the camber angle adjusting device that changes the camber angle of the vehicle wheel suspended from the vehicle body via the suspension device includes: the base member that is supported in the unsprung portion with respect to the suspension device; the drive member that is mounted in the vehicle body in the sprung portion, and generates the driving force; the cable member that transmits the driving force generated by the drive member; the swing lever that is disposed in the unsprung portion, and is coupled to the cable member; the crank member that is disposed in the unsprung portion, and is rotated by rotation of the swing lever; the moving member that is disposed in the unsprung portion, and converts the rotational movement of the crank member to make linear movement; and the pivot member that supports the vehicle wheel, and is supported pivotally about the camber axis with respect to the base member according to the movement of the moving member. Thus, unsprung weight can be reduced and ride quality and dynamics can be improved with a simple structure.

In the invention according to claim 2, the camber angle adjusting device further includes the speed increasing portion that increases the speed of the rotation of the swing lever to rotate the crank member. This allows a rotation angle of the crank member to be increased even if a cable is moved by a small distance. Thus, the driving force can be efficiently transmitted.

In the invention according to claim 3, the drive member has the motor, the speed reducing portion that reduces the speed of rotation of the motor, and the feed screw that has the trapezoidal threads and converts the rotational movement reduced in speed by the speed reducing portion to linear movement. Thus, self-locking reliability can be enhanced.

In the invention according to claim 4, the camber angle adjusting device further includes the angle sensor that, in the unsprung portion, detects the position of the crank member. Thus, since detection of the crank position is performed in the unsprung portion, the position can be accurately detected without being affected by elongation/contraction of a wire.

### BRIEF DESCRIPTION OF THE DRAWINGS

[FIG. 1] FIG. 1 is a diagram of a camber angle adjusting device of an embodiment as viewed from the front of a vehicle.
[FIG. 2] FIG. 2 is a diagram of the camber angle adjusting device of the embodiment as viewed from the side of a vehicle body in a lateral direction.
[FIG. 3] FIG. 3 is a diagram showing a drive member of the embodiment.
[FIG. 4] FIG. 4 is a cross-sectional view of the camber angle adjusting device of the embodiment before actuation.
[FIG. 5] FIG. 5 is an enlarged perspective view of the camber angle adjusting device of the embodiment before actuation.
[FIG. 6] FIG. 6 is an enlarged perspective view of the camber angle adjusting device of the embodiment during actuation.
[FIG. 7] FIG. 7 is an enlarged perspective view of the camber angle adjusting device of the embodiment after actuation.
[FIG. 8] FIG. 8 is a cross-sectional view of the camber angle adjusting device of the embodiment after actuation.

### BEST MODES FOR CARRYING OUT THE INVENTION

An embodiment of the present invention will be described below with reference to the accompanying drawings.

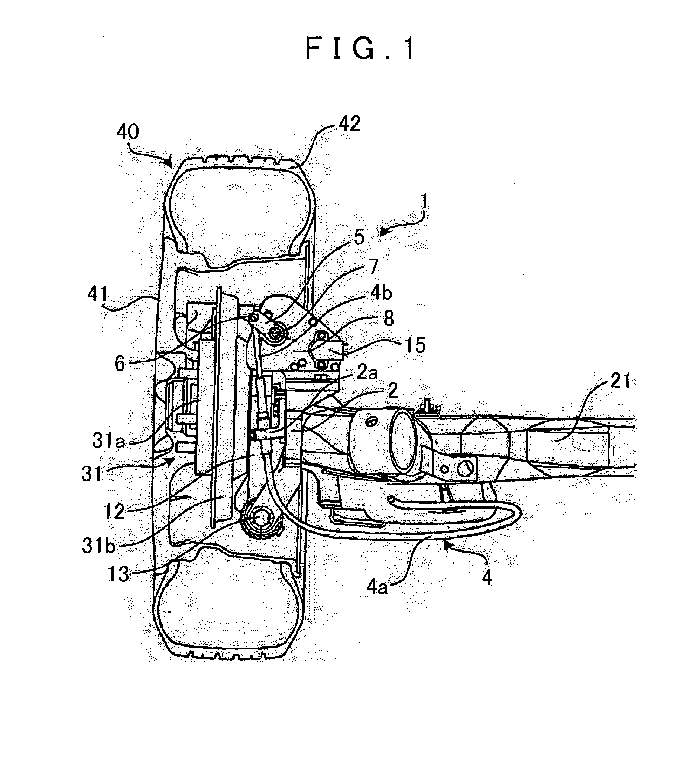

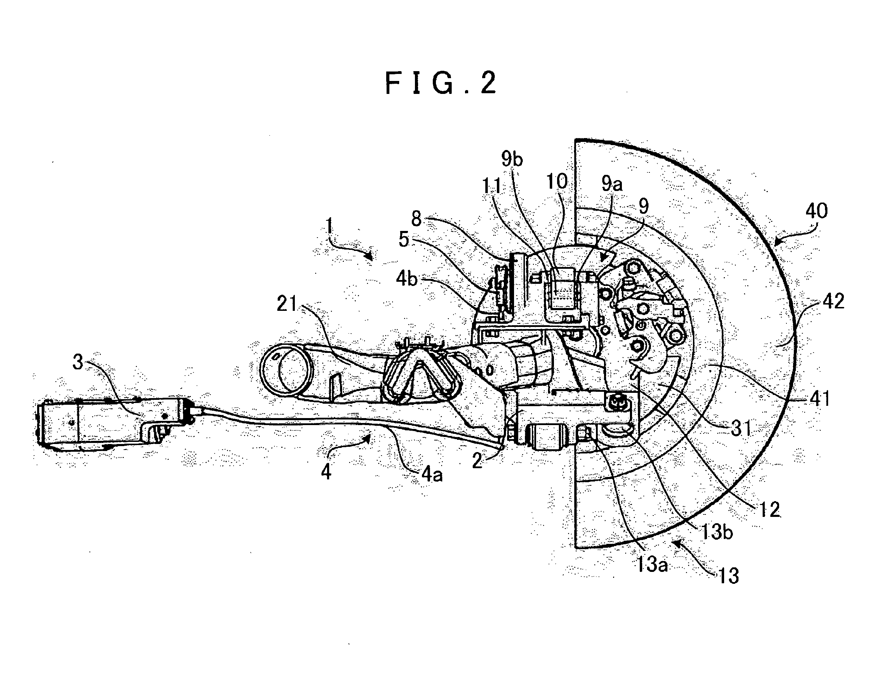

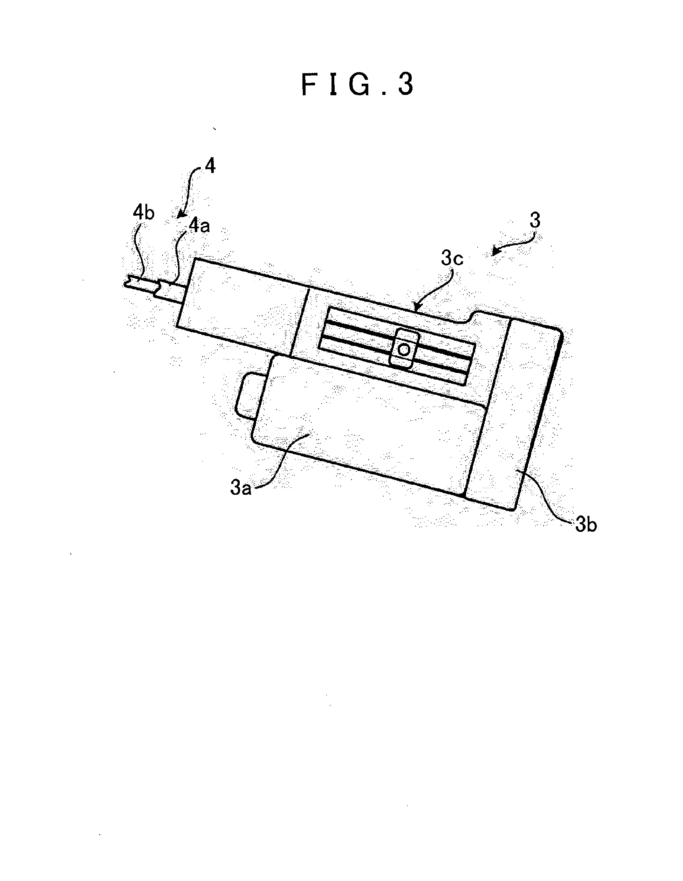

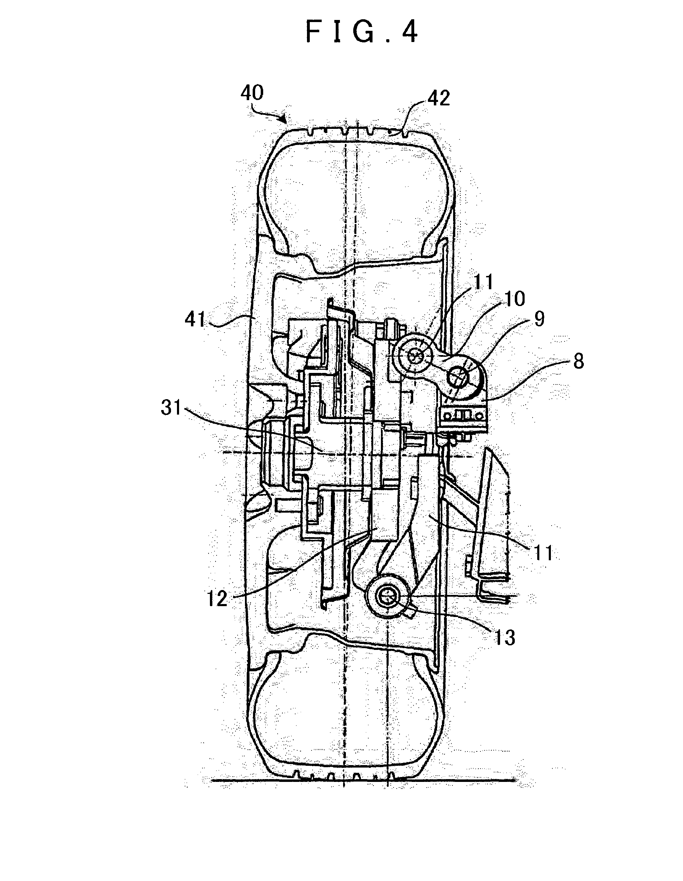

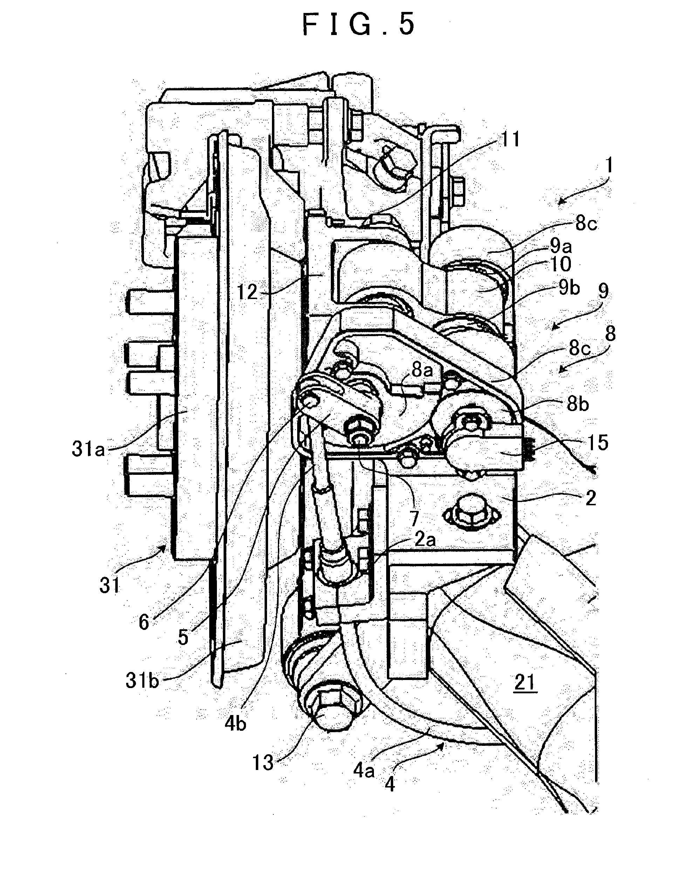

FIG. 1 is a diagram of a camber angle adjusting device 1 of an embodiment as viewed from the front of a vehicle. FIG. 2 is a diagram of the camber angle adjusting device 1 of the embodiment as viewed from the side of a vehicle body in a lateral direction. FIG. 3 is a diagram showing a drive member 3 of the embodiment. FIG. 4 is a cross-sectional view of the camber angle adjusting device 1 of the embodiment before actuation. FIG. 5 is an enlarged perspective view of the camber angle adjusting device 1 of the embodiment before actuation. A vehicle wheel 40 is shown in cross section in FIG. 1, and the front half of the vehicle wheel 40 is not shown in FIG. 2.

Although a right rear wheel is described in the present embodiment, the configuration of a left rear wheel is similar to that of the right rear wheel. As used herein, the terms "front" and "rear" correspond to a longitudinal direction of the vehicle. The term "lateral direction" refers to a direction perpendicular to the longitudinal direction of the vehicle and a vertical direction (the same applies to the following description).

In FIG. 1, "1" represents a camber angle adjusting device, "2" represents a base member, "3" represents a drive member, "4" represents a cable, "5" represents a swing lever, "6" represents a cable attaching member, "7" represents a swing shaft, "8" represents a speed increasing portion, "9" represents a crank member, "10" represent a moving member, "11" represents a coupling member, "12" represents a camber plate serving as a pivot member, "13" represents a camber plate support portion serving as a pivot member support portion, "21" represents a torsion beam serving as a suspension device, "31" represents a hub, "40" represent a vehicle wheel, "41" represents a wheel, and "42" represents a tire.

The camber angle adjusting device 1 of the present embodiment includes: a base member 2 that is supported by a torsion beam 21 swingably attached to the vehicle body (not shown); a drive member 3 that is disposed in the vehicle body such as a frame in a sprung portion with respect to a suspension device such as the torsion beam 21; a cable member 4 that has its one end coupled to the drive member 3 and transmits a driving force; a swing lever 5 that is disposed in an unsprung portion and is coupled to the other end of the cable member 4; a cable attaching member 6 that is disposed in the unsprung portion and attaches the cable member 4 to the swing lever 5; a swing shaft 7 that is disposed in the unsprung portion and serves as a swing center of the swing lever 5; a speed increasing portion 8 that is disposed in the unsprung portion and increases a swing angle of the swing lever 5; a crank member 9 that is disposed in the unsprung portion and has a crankshaft 9a increased in speed and pivoted by the speed increasing portion 8; a moving member 10 that is disposed in the unsprung portion, has its one side attached to a crankpin 9b of the crank member 9, and is reciprocated in a linear movement direction or substantially in the linear movement direction due to the rotation of the crankshaft 9a; a coupling member 11 that is disposed in the unsprung portion and is attached to the other side of the moving member 10; a camber plate 12 that is coupled to the moving member 10 by the coupling member 11; and a camber plate support portion 13 that pivotally supports the camber plate 12 with respect to the base member 2.

The base member 2 is a member that is provided on the torsion beam 21 coupling the vehicle body with the vehicle wheel 40, and that supports in the unsprung portion a large part of the camber angle adjusting device 1 except the drive member 3. The base member 2 has a cable support member 2a that supports the cable member 4. The cable support member 2a fixes a tube 4a of the cable member 4 described below, and supports a cable 4b so that the cable 4b is movable in the tube 4a. Thus, the cable 4b of the cable member 4 is capable of being elongated/contracted and swinging on the swing lever 5 side of the cable support member 2a, and the tube 4a is capable of swinging on the swing lever 5 side of the cable support member 2a.

As shown in FIG. 3, the drive member 3 is formed by a motor 3a such as a DC motor, a speed reducing portion 3b that reduces the speed of a driving force of the motor, a feed screw 3c that converts the rotational driving force transmitted from the speed reducing portion 3b to linear movement, etc. The speed reducing portion 3b reduces the speed of the driving force of the motor by combining gears having different numbers of teeth. A trapezoidal screw having trapezoidal threads is used as the feed screw 3c so that the feed screw 3c can self-lock. The drive member 3 is disposed in the vehicle body such as the frame in the sprung portion with respect to the suspension device such as the torsion beam 21. Mounting the drive member 3 in the sprung portion in this manner can reduce the unsprung weight, whereby ride quality and dynamics of the vehicle are improved.

The cable member 4 has the cable 4b that has its one end coupled to the feed screw 3c of the drive motor 3 and transmits the driving force to the swing lever 5 located at the other end of the cable 4b, and the tube 4a that surrounds the cable 4b. The tube 4a is supported by the cable support portion 2a of the base member 2. Using the cable member 4 to transmit power allows the drive member 3 mounted in the sprung portion to be flexibly coupled to the swing lever 5 mounted in the unsprung portion, and thus reduces degradation in suspension characteristics. Since the cable member 4 has a push-pull function, only one cable member 4 is required. This reduces the number of parts, whereby low cost can be implemented.

The cable is attached to one end of the swing lever 5 by the cable attaching member 6, and the other end of the swing lever 5 is supported by the swing shaft 7. Thus, according to movement of the cable 4b, the one end of the swing lever 5 is pushed or pulled, and the swing lever 5 swings about the swing shaft 7.

The swing shaft 7 is integrally attached to the other end of the swing lever 5, and rotates along with the swinging of the swing lever 5. The rotation of the swing shaft 7 is transmitted to the speed increasing portion 8.

As shown in FIG. 5, the speed increasing portion 8 has: a first gear 8a that is connected so as to rotate together with the swing shaft 7 and has teeth arranged substantially in a sector shape; a second gear 8b that has a circular shape with a diameter smaller than that of the sector shape of the first gear 8a, has teeth arranged on its circumference and meshing with the teeth of the first gear 8a, and transmits by rotation the driving force, transmitted to the second gear 8b by rotation of the first gear 8a, to the crank member 9 connected to a central shaft of the second gear 8b; and a case 8c that covers the first gear 8a and the second gear 8b. The case 8c of the present embodiment also covers a bearing (not shown) that supports a shaft end of the crank member 9 which is located on the opposite side from the second gear 8b, etc. Providing the speed increasing portion 8 allows the rotation angle of the crank member 9 to be increased even if the cable 4b is moved by a small distance. Thus, the driving force can be efficiently transmitted.

The crank member 9 is formed by the crankshaft 9a and the crankpin 9b that is disposed at a position shifted with respect to the crankshaft 9a in a direction perpendicular to the shaft. The crankshaft 9a is rotated by rotation of the second gear 8b of the speed increasing portion 8, and the crankpin 9b makes arc-like rotational movement about the crankshaft 9a along with the rotation of the crankshaft 9a. The crank member 9 preferably has an angle sensor 15. By mounting, on the crankshaft 9a in the unsprung portion, a position sensor that controls the camber angle, the position can be accurately detected without being affected by elongation/contraction of the cable 4b due to aging etc. The feed screw 3c shown in FIG. 3 is capable of self-locking.

The moving member 10 has its one end attached pivotally with respect to the crankpin 9b, and the coupling member 11 is coupled to the other end of the moving member 10. The moving member 10 converts the rotational movement of the crankpin 9b to linear movement, and reciprocates. A rubber bush etc. is used in the present embodiment.

The coupling member 11 is a member that couples the moving member 10 to the camber plate 12. The moving member 10 may be directly coupled to the camber plate 12 without providing the coupling member 11.

The camber plate 12 supports a case 31a of a hub 31, and has its one end coupled to the moving member 10 by the coupling member 11 and the other end supported by the camber plate support portion 13 pivotally with respect to the base member 2. The camber plate 12 pivots with respect to the base member 2 along with movement of the moving member 10. The hub 31 pivots with the pivoting of the camber plate 12, whereby the camber angle of the vehicle wheel 40 can be adjusted.

The camber plate support portion 13 has a first support portion 13a and a second support portion 13b that is disposed rearward of the first support portion 13a. The first support portion 13a is formed by a shaft member that supports the base member 2 and the camber plate 12 on a camber axis. The second support portion 13b is formed by a rubber bush etc. The first support portion 13a and the second support portion 13b need not necessarily be aligned in line in the longitudinal direction of the vehicle. Thus, the camber angle adjusting device 1 can be set so that not only the camber angle but also the toe angle change when the camber angle adjusting device 1 is actuated. The second support portion 13b need not necessarily be provided, and the second support portion 13b is omitted in FIG. 1 and FIGS. 5 to 7.

The torsion beam 21 is a suspension that swings with respect to the vehicle body to absorb vibration. In the present embodiment, the base member 2 is mounted on the torsion beam 21.

The hub 31 has the case 31a that is supported by the camber plate 12, and a rotating portion 31b that is coupled to a drive shaft (not shown) and that is rotated by a driving force of an engine, a motor, etc.

The vehicle wheel 40 has a wheel 41 that is fastened to the rotating portion 31b of the hub 31 by a bolt etc. and that rotates together with the rotating portion 31b, and a tire attached to the outer periphery of the wheel 41.

Actuation of the camber angle adjusting device 1 of the present embodiment will be described below.

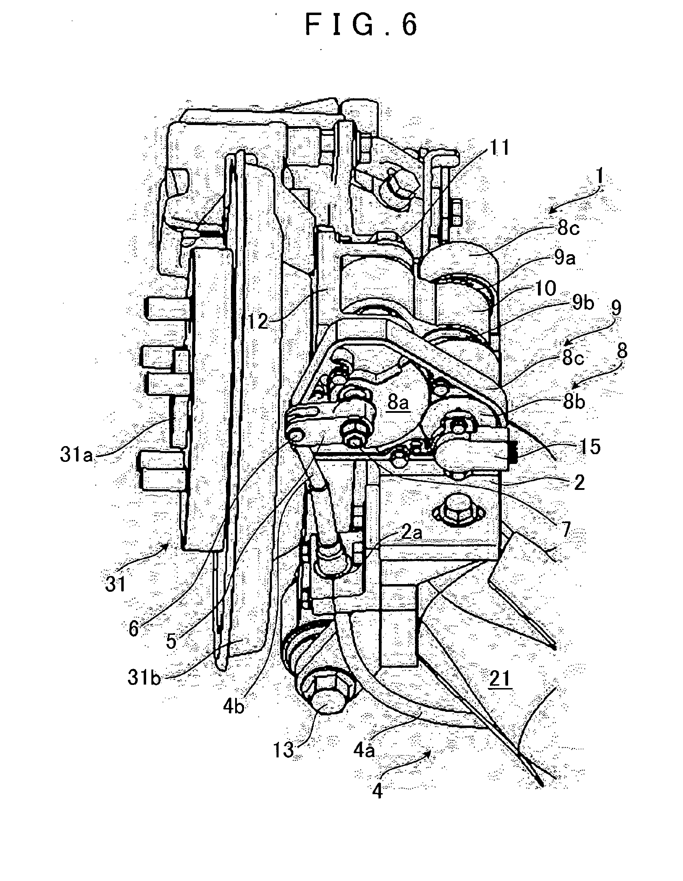

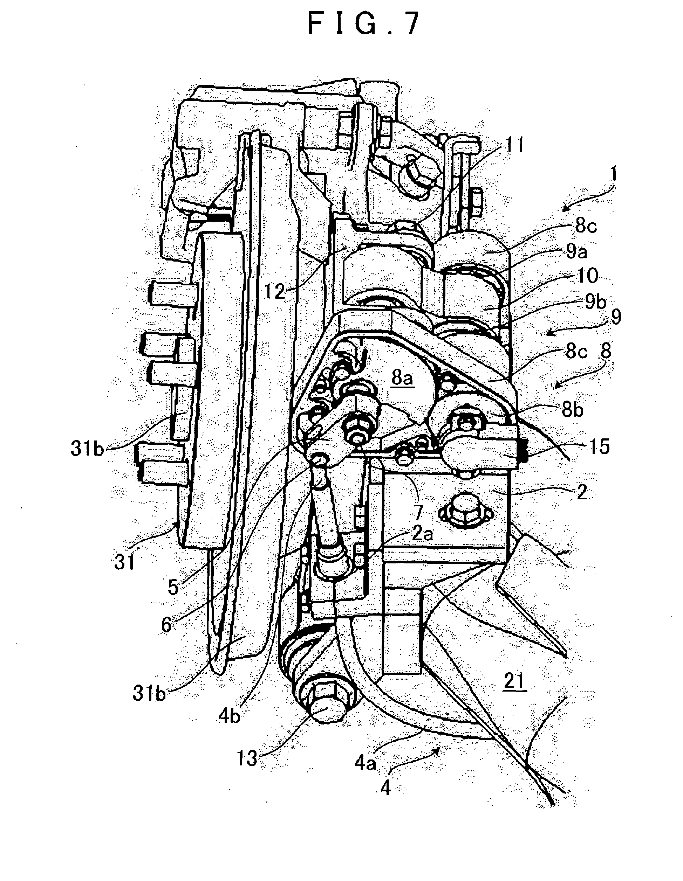

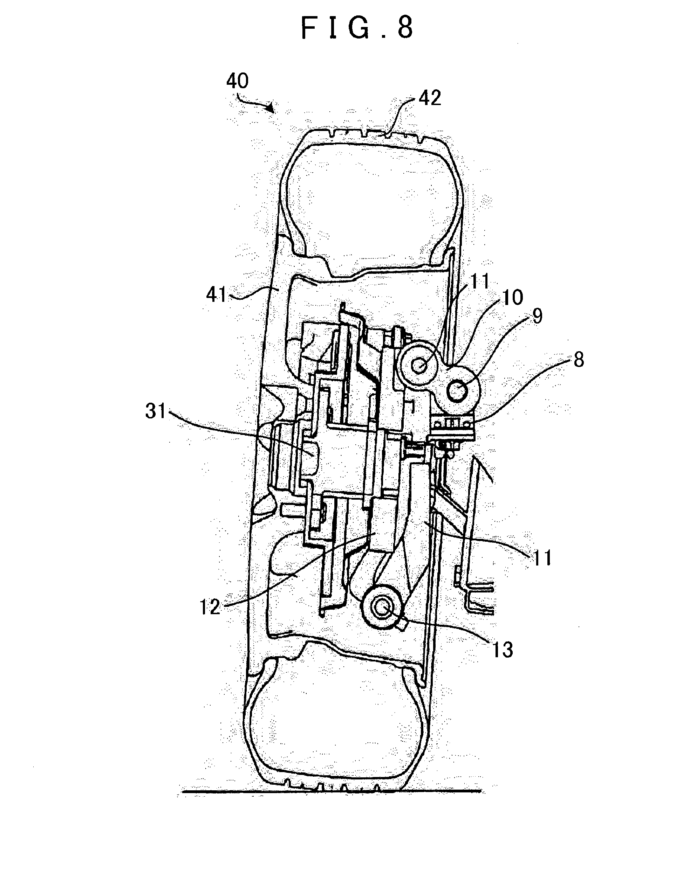

FIG. 6 is an enlarged perspective view of the camber angle adjusting device 1 of the embodiment during actuation. FIG. 7 is an enlarged perspective view of the camber angle adjusting device 1 of the embodiment after actuation. FIG. 8 is a cross-sectional view of the camber angle adjusting device 1 of the embodiment after actuation.

As shown in FIG. 4, in the present embodiment, alignment adjustment is made before adjustment operation of the camber angle adjusting device 1 so as to cause the vehicle wheel 40 to have a camber angle in advance. The camber angle before the adjustment operation of the camber angle adjusting device 1 may be 0°.

At this time, the line connecting the crankshaft 9a, the crankpin 9b, and the coupling member 11 that serves as a joint portion between the moving member 10 and the camber plate 12 is desirably a straight line. Forming such straight line provides self-locking and reduces the possibility of movement in response to an external force.

As shown in FIG. 5, before the adjustment operation of the camber angle adjusting device 1, the cable 4b has not been pulled, and the swing lever 5 is located above the swing shaft 7.

An example will be described below in which the motor 3a starts driving to cause the camber angle adjusting device 1 to perform the adjustment operation. First, in response to a command to adjust the camber angle from a control device (not shown) etc., the motor 3a of the drive member 3 starts driving.

The driving force of the motor 3a is reduced in speed by the speed reducing portion 3b, and moves the feed screw 3c. The feed screw 3c converts the rotational movement of the motor 3a to linear movement. The cable 4b of the cable member 4 is pulled by this linear movement. Since the tube 4a is attached to the base member 2, the cable 4b moves by sliding with respect to the tube 4a.

The cable 4b is attached to the one end of the swing lever 5 by the cable attaching member 6. Thus, as the cable 4b is pulled, the swing lever 5 swings about the swing shaft 7 located at the other end of the swing lever 5, as shown in FIG. 6.

The swing shaft 7 rotates together with the swing lever 5. The rotation of the swing shaft 7 is transmitted to the first gear 8a of the speed increasing portion 8 which rotates together with the swing shaft 7. The rotation of the first gear 8a is transmitted to the second gear 8b that meshes with the first gear 8a. The rotation is increased in speed according to the gear ratio between the first gear 8a and the second gear 8b.

Since the second gear 8b rotates together with the crankshaft 9a of the crank member 9, the crank member 9 is rotated by the rotation of the second gear 8b. The other end of the moving member 10 having its one end attached to the crankpin 9b is moved substantially in the linear movement direction by the rotation of the crank member 9. The coupling member 11 is also moved substantially in the linear movement direction by the movement of the moving member 10. The camber plate 12 having its one end attached to the coupling member 11 pivots with respect to the base member 2 about the camber plate support portion 13 supporting the other end of the camber plate 12.

Then, the motor 3a further drives, and the cable 4b is further pulled, whereby as shown in FIG. 7, the swing lever 5 further swings about the swing shaft 7 located at the other end of the swing lever 5. Thus, the camber plate 12 is further pivoted, whereby the camber angle is further provided.

The rotation angle of the motor 3a is preferably set in advance so that the crankshaft 9 rotates by about 180° in view of increase and reduction in speed by the speed reducing portion 3b and the speed increasing portion 8. Specifically, as shown in FIGS. 7 and 8, the camber angle is set so as to become a preset predetermined angle when the crank member 9 rotates by about 180°. The rotation angle of the motor 3a is set according to this angle.

At this time, as before the adjustment operation of the camber angle adjusting device 1, the line connecting the crankpin 9b, the crankshaft 9a, and the coupling member 11 that serves as the joint portion between the moving member 10 and the camber plate 12 is desirably a straight line. Forming such straight line provides self-locking and reduces the possibility of movement in response to an external force.

As shown in FIG. 8, the motor 3a is configured to be able to rotate forwardly and reversely, and the vehicle wheel 40 having the camber angle adjusted by the camber angle adjusting device 1 negatively with respect to that before adjustment can be adjusted back to the camber angle before adjustment shown in FIG. 4 by reversely rotating the motor 3a. As another configuration, the vehicle wheel 40 may be adjusted back to the camber angle before adjustment by further rotating the motor 3a of the drive member 3.

As described above, according to the present embodiment, the camber angle adjusting device 1 that changes the camber angle of the vehicle wheel 40 suspended from the vehicle body via the torsion beam 21 includes: the base member 2 that is supported in the unsprung portion with respect to the suspension device; the drive member 3 that is mounted in the vehicle body as the sprung portion and generates a driving force; the cable member 4 that transmits the driving force generated by the drive member 3; the swing lever 5 that is coupled to the cable member 4; the crank member 9 that is rotated by rotation of the swing lever 5; the moving member 10 that converts the rotation movement of the crank member 10 to linear movement; and the camber plate 12 that supports the vehicle wheel 40, and is supported pivotally about the camber axis with respect to the base member 2 along with the movement of the moving member 10. Thus, the unsprung weight can be reduced and ride quality and dynamics can be improved with a simple structure.

The camber angle adjusting device 1 further includes the speed increasing portion 8 that increases the speed of rotation of the swing lever 5 and rotates the crank member 9. This allows the rotation angle of the crank member 9 to be increased even if the cable 4b is moved by a small distance. Thus, the driving force can be efficiently transmitted.

The drive member 3 has the motor 3a, the speed reducing portion 3b that reduces the speed of rotation of the motor 3a, and the feed screw 3c that has trapezoidal threads and converts the rotational movement reduced in speed by the speed reducing portion 3b to linear movement. Thus, self-locking reliability can be enhanced.

The camber angle adjusting device 1 further includes the angle sensor that detects, in the unsprung portion, the position of the crank member. Thus, since detection of the crank position is performed in the unsprung portion, the position can be accurately detected without being affected by elongation/contraction of a wire.

### INDUSTRIAL APPLICABILITY

In the present invention described above, a camber angle adjusting device can be provided which, with a simple structure, reduces the unsprung weight and improves ride quality and dynamics.

## Claims

1. A camber angle adjusting device that changes a camber angle of a vehicle wheel suspended from a vehicle body via a suspension device, the camber angle adjusting device **characterized by** comprising:
a base member that is supported in an unsprung portion with respect to the suspension device;
a drive member that is mounted in the vehicle body in a sprung portion, and generates a driving force;
a cable member that transmits the driving force generated by the drive member;
a swing lever that is disposed in the unsprung portion, and is coupled to the cable member;
a crank member that is disposed in the unsprung portion, and is rotated by rotation of the swing lever;
a moving member that is disposed in the unsprung portion, and converts the rotational movement of the crank member to make linear movement; and
a pivot member that supports the vehicle wheel, and is supported pivotally about a camber axis with respect to the base member according to the movement of the moving member.

2. The camber angle adjusting device according to claim 1, **characterized by** further comprising:
a speed increasing portion that increases a speed of the rotation of the swing lever to rotate the crank member.

3. The camber angle adjusting device according to claim 1 or 2, **characterized in that**
the drive member has a motor, a speed reducing portion that reduces a speed of rotation of the motor, and a feed screw that has trapezoidal threads and converts the rotational movement reduced in speed by the speed reducing portion into linear movement.

4. The camber angle adjusting device according to any one of claims 1 to 3, **characterized by** further comprising:
an angle sensor that, in the unsprung portion, detects a position of the crank member.

## Patentansprüche

1. Radsturzwinkeleinstellvorrichtung, die einen Radsturzwinkel eines Fahrzeugrads ändert, das an einer Fahrzeugkarosserie über eine Aufhängungsvorrichtung aufgehängt ist, wobei die Radsturzwinkeleinstellvorrichtung **dadurch gekennzeichnet ist, dass** sie Folgendes aufweist:
ein Basiselement, das in einem ungefederten Abschnitt in Bezug auf die Aufhängungsvorrichtung gehalten ist;
ein Antriebselement, das in der Fahrzeugkarosserie in einem gefederten Abschnitt montiert ist und eine Antriebskraft erzeugt;
ein Seilzugelement, das die durch das Antriebselement erzeugte Antriebskraft überträgt;
einen Schwinghebel, der in dem ungefederten Abschnitt angeordnet ist und mit dem Seilzugelement gekoppelt ist;
ein Kurbelelement, das in dem ungefederten Abschnitt angeordnet ist und durch die Drehung des Schwinghebels dreht;
ein Bewegungselement, das in dem ungefederten Abschnitt angeordnet ist und das die Drehbewegung des Kurbelelements umwandelt, um eine Längsbewegung auszuführen; sowie
ein Schwenkelement, das das Fahrzeugrad hält und um eine Radsturzachse in Bezug auf das Basiselement entsprechend der Bewegung des Bewegungselements schwenkbar gehalten ist.

2. Radsturzwinkeleinstellvorrichtung nach Anspruch 1, ferner **gekennzeichnet, durch**:
einen die Geschwindigkeit erhöhenden Abschnitt, der eine Drehzahl des Schwinghebels erhöht, um das Kurbelelement zu drehen.

3. Radsturzwinkeleinstellvorrichtung nach Anspruch 1 oder 2, **dadurch gekennzeichnet, dass**
das Antriebselement einen Motor, einen die Geschwindigkeit verringernden Abschnitt, der eine Drehzahl des Motors verringert, sowie eine Vorschubspindel hat, die ein Trapezgewinde hat und die durch den die Geschwindigkeit verringernden Abschnitt geschwindigkeitsverringerte Drehbewegung in eine Längsbewegung umwandelt.

4. Radsturzwinkeleinstellvorrichtung nach einem der Ansprüche 1 bis 3, ferner **gekennzeichnet, durch**:
einen Winkelsensor, der in dem ungefederten Abschnitt die Stellung des Kurbelelements erfasst.

## Revendications

1. Dispositif de réglage d'angle de carrossage qui modifie un angle de carrossage d'une roue de véhicule suspendue à une carrosserie de véhicule par l'intermédiaire d'un dispositif de suspension, le dispositif de réglage d'angle de carrossage étant **caractérisé en ce qu'**il comprend :
un élément de base qui est supporté dans une partie non suspendue par rapport au dispositif de suspension ;
un élément d'entraînement qui est monté dans la carrosserie de véhicule dans une partie suspendue et qui génère une force d'entraînement ;
un élément de câble qui transmet la force d'entraînement générée par l'élément d'entraînement ;
un levier oscillant qui est disposé dans la partie non suspendue et qui est couplé à l'élément de câble ;
un élément de manivelle qui est disposé dans la partie non suspendue et qui est entraîné en rotation par la rotation du levier oscillant ;
un élément mobile qui est disposé dans la partie non suspendue et qui convertit le mouvement de rotation de l'élément de manivelle pour obtenir un mouvement linéaire ; et
un élément de pivot qui supporte la roue de véhicule et qui est supporté en pivotement autour d'un axe de carrossage par rapport à l'élément de base en fonction du mouvement de l'élément mobile.

2. Dispositif de réglage d'angle de carrossage selon la revendication 1, **caractérisé en ce qu'**il comprend en outre :
une partie d'augmentation de vitesse qui augmente une vitesse de rotation du levier oscillant pour faire tourner l'élément de manivelle.

3. Dispositif de réglage d'angle de carrossage selon la revendication 1 ou 2, **caractérisé en ce que**
l'élément d'entraînement a un moteur, une partie de réduction de vitesse qui réduit une vitesse de rotation du moteur et une vis d'alimentation qui a des filetages trapézoïdaux et qui convertit le mouvement de rotation réduit en vitesse par la partie de réduction de vitesse en un mouvement linéaire.

4. Dispositif de réglage d'angle de carrossage selon l'une quelconque des revendications 1 à 3, **caractérisé en ce qu'**il comprend en outre :
un capteur d'angle qui, dans la partie non suspendue, détecte une position de l'élément de manivelle.
